# FASCICULE DE BREVET EUROPEEN

(11) **EP 1 221 787 B1**
(45) Date de publication et mention de la délivrance du brevet: **05.04.2006**
(21) Numéro de dépôt: 02290015.3
(22) Date de dépôt: 07.01.2002
(51) Int. Cl.: H04L 12/24

(54) **Procédé de visualisation d'un anneau au sein d'un reseau de telecommunication**
Verfahren zur Visualisierung einer Ringanordnung in einem Telekommunikationsnetzwerk
Method for the visualization of a ring in a telecommunications network

(30) Priorité: 09.01.2001 FR 0100212
(43) Date de publication de la demande: 10.07.2002
(73) Titulaire: FRANCE TELECOM, 75015 Paris (FR)
(72) Inventeur: Burity, Luiz, 92170 Vanves (FR)
(74) Mandataire: Poulin, Gérard

(56) Documents cités:
- US-A- 6 112 015
- TARLE H: "FMAS-AN OPERATIONS SUPPORT SYSTEM FOR TRANSPORT NETWORKS" ON - ERICSSON REVIEW, ERICSSON. STOCKHOLM, SE, vol. 67, no. 4, 1990, pages 163-182, XP000206742 ISSN: 0014-0171
- PATHAK G ET AL: "INTEGRATED NETWORK AND SERVICE MANAGEMENT FOR THE NCIH" IEEE NETWORK, IEEE INC. NEW YORK, US, vol. 8, no. 6, 1 novembre 1994 (1994-11-01), pages 56-63, XP000480184 ISSN: 0890-8044

## Description

### Domaine technique

La présente invention concerne un procédé de visualisation d'un anneau, par exemple de type SDH ou WDM, au sein d'un réseau de télécommunication, destiné en particulier aux utilisateurs du domaine ADR (Affectation des Ressources).

### Etat de la technique antérieure

Un réseau de télécommunication peut être représenté comme un graphe, avec ses noeuds et ses arcs, les noeuds comportant les équipements de commutation (centraux téléphoniques, brasseurs ATM, routeurs IP) et les arcs assurant la fonction de transport d'information. Ces arcs peuvent être des câbles, des liaisons hertziennes, ou des câbles en fibre optique.

Dans de tels réseaux, la principale technique de transmission utilisée aujourd'hui est la technique dite "hiérarchie numérique synchrone" ou SDH ("Synchronous Digital Hierarchy"), telle que décrite dans les documents référencés [1] et [2] en fin de description. A moyen terme elle sera utilisée conjointement avec la technique de multiplexage en longueur d'onde WDM ("Wavelength" Division Multiplexing"), telle que décrite dans le document référencé [3].

Dans la technique SDH, une architecture de multiplexage par entrelacements d'octets permet la concentration et le multiplexage des voies de transmission numériques synchronisées.

Dans la technique WDM, un multiplexage en longueur d'onde sur fibre optique, dans lequel différents lasers de longueurs d'ondes distinctes envoient deux signaux ou plus, à travers une fibre optique, permet d'atteindre le térabit/s en transmission.

Comme décrit notamment dans le document référencé [2], la technique SDH utilise plusieurs types d'équipements, notamment les multiplexeurs d'insertion et d'extraction ou MIE. Si plusieurs multiplexeurs d'insertion et d'extraction sont raccordés dans une structure en boucle, le sous-réseau ainsi défini, appelé "anneau", peut garantir une sécurisation à 100% des liaisons supportées.

Dans un anneau composé de multiplexeurs d'insertion et d'extraction (MIE-16) de capacité totale de 16 VC4 (conduit numérique SDH de 155 Mbits/s), chacun des conduits peut être protégé en cas de coupure. Si une coupure arrive sur une partie de l'anneau, le trafic protégé est re-routé automatiquement sur une autre partie de l'anneau, et cela en quelques millisecondes. Grâce aux gestionnaires d'anneau (GLM), qui sont des logiciels installés sur des machines Unix par exemple, raccordés aux différents multiplexeurs d'insertion et d'extraction, il est possible d'une part de surveiller l'ensemble des liaisons de l'anneau, et d'autre part de reconfigurer l'anneau, en ajoutant et en enlevant des liaisons.

La technique WDM permettra de traiter des capacités encore plus importantes, en optimisant l'utilisation de la fibre. Dans cette technique WDM des configurations en anneaux, avec des multiplexeurs d'insertion et d'extraction et des gestionnaires d'anneau, sont également proposées, avec des missions équivalentes.

Un anneau, qui est une entité abstraite, est donc réalisé par un ensemble de multiplexeurs d'insertion et d'extraction connectés par des sections, en formant une boucle.

La norme G805 de l'UIT-T (Union Internationale des Télécommunications, secteur des Télécommunications), citée par exemple dans le document référencé [3], introduit les notions de sous-réseau et de connexion de sous-réseau, pour avoir une vision des connexions par couple de multiplexeurs d'insertion et d'extraction avec leurs points de terminaisons dans les multiplexeurs d'insertion et d'extraction.

Dans le domaine de la documentation papier de l'art connu, une représentation graphique d'anneau se résume à présenter les multiplexeurs d'insertion et d'extraction en boucle et à faire seulement apparaître certaines informations :
- les mécanismes de protection utilisée,
- les sites comportant des multiplexeurs d'insertion et d'extraction,
- la localisation du multiplexeur d'insertion et d'extraction pilote,
- le type de brassage utilisé,
- les liens inter-anneaux.

Les équipementiers offrent, quant à eux, dans leurs gestionnaires d'anneau, une représentation synthétique d'un multiplexeur d'insertion et d'extraction particulier ou d'une connexion entre deux multiplexeurs d'insertion et d'extraction.

Mais il n'existe pas à l'heure actuelle de représentation synthétique d'un anneau qui présente l'essentiel des informations des différents éléments qui le constituent. Les représentations graphiques de l'art connu sont partielles et très souvent axées sur les multiplexeurs d'insertion et d'extraction.

L'objectif de l'invention est de proposer une nouvelle représentation graphique d'un anneau au sein d'un réseau de télécommunications destinée aux utilisateurs du domaine Affectation de Ressources (ADR), qui pallie les défauts des techniques antérieures et présente une vue synthétique de tous les éléments constituant l'anneau.

Il existe différents documents de l'art antérieur, et notamment les documents suivants :

Le document référencé [5] décrit une méthode permettant de représenter graphiquement des informations détaillées d'état et de mode pour des objets de réseau, en particulier des objets d'un réseau de télécommunications. Dans une telle représentation graphique, une icône de base est affichée par chaque objet de réseau. Des combinaisons d'état et de mode se produisant plus communément sont données en donnant des attributs aux icônes de base tels que des contours tiretés, pleins, ou tridimensionnelles. Des combinaisons d'état et de mode se produisant moins communément sont données en attachant des icônes modificatrices aux icônes de base.

Le document référencé [6] décrit un système de gestion de ressources permettant à l'opérateur d'un réseau d'améliorer l'administration; la supervision et le contrôle de réseaux de transferts et de lignes spécialisées.

### Exposé de l'invention

L'invention propose un procédé de visualisation d'un anneau, qui peut être un anneau SDH ou un anneau WDM, ledit anneau comportant plusieurs multiplexeurs d'insertion et d'extraction connectés par des sections, en formant une boucle, ledit procédé comprenant une étape de représenter chaque multiplexeur d'insertion et d'extraction par une figure géométrique, une étape de représenter lesdites sections entre lesdits multiplexeurs d'insertion et d'extraction sous la forme d'un trait, et également une étape de représenter une liste, ledit procédé caractérisé en ce que ladite figure comporte au moins une patte d'un premier, second ou troisième type, une patte d'un premier type représentant une alvéole libre, une patte d'un second type représentant une alvéole occupée par une carte d'accès, la carte n'étant pas occupée, une patte d'un troisième type représentant une alvéole occupée par une carte d'accès qui est déjà occupée, en ce que ledit trait est d'un premier type si l' anneau est routé, d'un second type, si l'anneau n'est pas routé, mais s'il a de la disponibilité, c'est-à-dire s'il a assez de ressources pour le router, ou d'un troisième type, si l'anneau n'est pas routé et si, de plus, il n'a pas de disponibilité, c'est-à-dire s'il n'a pas assez de ressources pour le router, et en ce que ladite liste est une liste des liaisons occupant l'anneau.

Dans un mode de réalisation avantageux, une patte d'un premier type est d'une première couleur, une patte d'un second type est d'une seconde couleur, une patte d'un troisième type est de cette même seconde couleur et est surmontée d'un caractère géométrique ou alphanumérique, par exemple un point. Chaque multiplexeur d'insertion et d'extraction est représenté par un identifiant unique qui fournit les informations suivantes :
- le site où le multiplexeur d'insertion et d'extraction est localisé,
- le numéro d'ordre du multiplexeur d'insertion et d'extraction à l'intérieur du site, ce qui permet de distinguer des multiplexeurs d'insertion et d'extraction co-localisés,
- le débit du multiplexeur d'insertion et d'extraction.

Sont également représentés :
- l'identifiant unique de l'anneau, qui comporte le type de l'anneau,
- la politique de protection : conduit ou section.

Les sections entre les multiplexeurs d'insertion et d'extraction peuvent être représentées sous la forme :
- d'un trait d'une première couleur si l'anneau est routé,
- d'un trait d'une seconde couleur interrompu, si l'anneau n'est pas routé, mais s'il a de la disponibilité,
- d'un trait de cette même seconde couleur mais continu, si l'anneau n'est pas routé et si, de plus, il n'a pas assez de ressources pour le router.

Avantageusement le libellé d'une liaison donnée est défini par un identifiant et une liste-noeuds traversés, dans lequel sont représentés :
- l'identifiant unique de la liaison,
- la liste des noeuds traversés par la liaison dans laquelle on trouve les extrémités de la liaison, cette liste de noeuds étant représentative du routage de chaque liaison occupant l'anneau.

On peut également avoir la représentation suivante :
- un noeud considéré est inscrit en caractère gras s'il fait partie du routage au niveau immédiatement supérieur de la liaison,
- un noeud considéré n'est pas inscrit en caractère gras s'il ne fait pas partie du routage de la liaison au niveau immédiatement supérieur, mais s'il est présent au niveau support (câble ou infrastructure),
- le traversé d'un anneau est symbolisé par des caractères spéciaux précisant la boucle d'appartenance de l'anneau traversé.

Avantageusement le procédé de l'invention permet à un utilisateur du domaine d'affectation des ressources d'obtenir, d'un seul coup d'oeil, les informations suivantes :
- Sur un multiplexeur d'insertion et d'extraction :
   - le nombre total d'alvéoles,
   - les alvéoles qui sont libres,
   - les alvéoles qui sont occupées par des cartes d'accès vides,
   - les alvéoles qui sont occupées par des cartes d'accès, qui sont elles-mêmes occupées,
   - le nombre total de cartes résultantes, et le nombre de cartes résultantes non occupées.
- Sur les sections de multiplexage définies entre les multiplexeurs d'insertion et d'extraction :
   - si l'anneau est routé entre deux multiplexeurs d'insertion et d'extraction,
   - si l'anneau n'est pas routé et s'il a de la disponibilité,
   - si l'anneau n'est pas routé, et s'il n'a pas assez de ressources pour le router.
- Sur l'occupation de l'anneau :
   - si les extrémités de la liaison sont définies entre deux multiplexeurs d'insertion et d'extraction,
   - si les extrémités de la liaison sont définies à l'extérieur de l'anneau et la liaison traverse l'anneau.

Avantageusement tous les objets présentés sur l'écran de visualisation, par exemple les pattes du multiplexeur d'insertion et d'extraction, sont sensibles à une souris. L'utilisateur peut ainsi naviguer dans la base de données, s'il souhaite approfondir sa connaissance de l'anneau ou du réseau auquel il est inséré.

La représentation graphique d'un anneau selon l'invention permet donc :
- de matérialiser la notion abstraite d'anneau,
- d'offrir une visibilité des multiplexeurs d'insertion et d'extraction, des cartes d'accès, de l'occupation des cartes, de l'occupation des sections entre les multiplexeurs d'insertion et d'extraction et de leurs routages,
- de décrire les caractéristiques principales d'un anneau.

### Brève description des dessins

- La figure 1 illustre la représentation graphique générale selon le procédé de l'invention,
- la figure 2 illustre la représentation graphique d'un multiplexeur d'insertion et d'extraction selon le procédé de l'invention,
- la figure 3 illustre la représentation graphique obtenue dans un exemple de mise en oeuvre du procédé de l'invention.

### Exposé de modes de réalisation

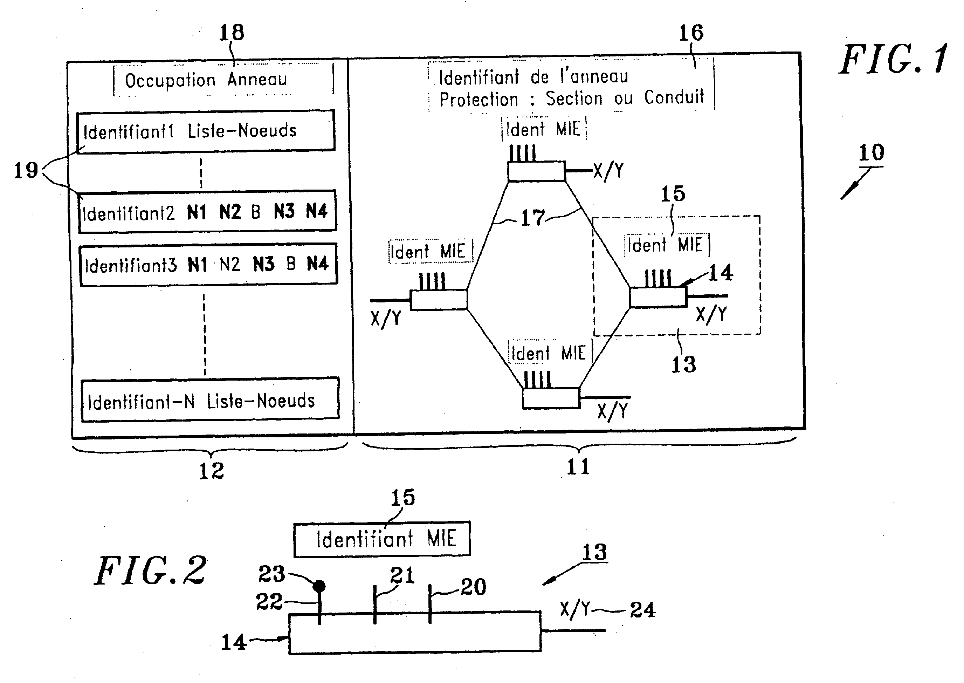

L'invention concerne un procédé de visualisation d'un anneau, par exemple de type SDH ou WDM, au sein d'un réseau de télécommunication, comportant plusieurs multiplexeurs d'insertion et d'extraction connectés par des sections. Ce procédé permet de présenter, sur un écran de visualisation 10, d'une part un synoptique 11 de l'anneau et d'autre part une liste 12 des liaisons occupant l'anneau, comme illustré sur la figure 1.

### Le synoptique 11 de l'anneau

Dans ce synoptique 11 chaque multiplexeur d'insertion et d'extraction 13 est représenté, d'une part, par une figure géométrique 14, ici un rectangle, ayant plusieurs pattes et, d'autre part, par son identifiant 15.

Comme illustré sur la figure 2, cette figure géométrique 14 peut comprendre une patte 20 d'une première couleur, par exemple verte, représentant une alvéole libre, une patte 21 d'une seconde couleur, par exemple rouge, une alvéole occupée par une carte d'accès, la carte n'étant pas occupée, une patte 22 de cette même seconde couleur, surmontée d'un point 23, une alvéole occupée par une carte d'accès, elle-même étant déjà occupée. Les termes X/Y en 24 signifient qu'il y a Y cartes résultantes dont X cartes sont libres.

Cette représentation des multiplexeurs d'insertion et d'extraction 13 permet de connaître :
- le nombre total d'alvéoles,
- les alvéoles qui sont libres,
- les alvéoles qui sont occupées par des cartes d'accès, elles-mêmes étant occupées,
- le nombre total de cartes résultantes, et le nombre de cartes résultantes non occupées.

Chaque multiplexeur d'insertion et d'extraction 13 est également représenté par un identifiant 15 qui fournit les informations suivantes :
- le site où le multiplexeur d'insertion et d'extraction est localisé,
- le numéro d'ordre du multiplexeur d'insertion et d'extraction à l'intérieur du site, ce qui permet de distinguer les multiplexeurs d'insertion et d'extraction co-localisés.

Plusieurs autres informations, référencées 16 sur la figure 1, sont présentées sous forme très synthétique :
- l'identifiant de l'anneau comportant le type de l'anneau, par exemple SDH ou WDM,
- la politique de protection : conduit, qui correspond à l'occupant de l'anneau, ou section, qui correspond à une liaison synchrone entre deux multiplexeurs d'insertion et d'extraction consécutifs.

Les sections 17 de multiplexage entre les multiplexeurs d'insertion et d'extraction 13 sont routées, sur des supports optiques. On peut envisager à titre d'exemple la représentation suivante :
- trait d'une première couleur, par exemple verte, entre deux multiplexeurs d'insertion et d'extraction 13 si l'anneau est routé,
- trait d'une seconde couleur interrompu, par exemple rouge, entre deux multiplexeurs d'insertion et d'extraction 13 si l'anneau n'est pas routé, mais s'il a de la disponibilité,
- trait de cette même seconde couleur mais continu entre deux multiplexeurs d'insertion et d'extraction 13, si l'anneau n'est pas routé et si, de plus, il n'a pas assez de ressources pour le router.

### La liste 12 des liaisons occupant l'anneau

L'occupation de l'anneau (un tel intitulé est référencé 18 sur la figure 1) correspond à l'occupation des sections définies entre les multiplexeurs d'insertion et d'extraction.

Le procédé de l'invention permet de donner la liste de toutes les liaisons de l'anneau, qui peuvent être :
- soit des liaisons "intra-anneau" lorsque les extrémités de ces liaisons sont respectivement définies entre deux multiplexeurs d'insertion et d'extraction de l'anneau,
- soit des liaisons "trans-anneau" lorsque les extrémités de la liaison sont définies à l'extérieur de l'anneau et que la liaison traverse l'anneau.

Le libellé d'une liaison donnée peut être défini par un identifiant liste-noeuds-traversés, référencé en 19 sur la figure 1, dans lequel sont représentés :
- l'identifiant unique de la liaison (identifiant 1, identifiant 2, identifiant N), c'est-à-dire par exemple ses extrémités et son débit,
- la liste des noeuds traversés par la liaison : N1, N2, N3., dans laquelle on trouve les extrémités de la liaison. Cette liste de noeuds est représentative du routage de chaque liaison occupant l'anneau.

On peut utiliser la convention suivante pour représenter cette liste de noeuds :
- un noeud considéré, par exemple N1, N2, N3 et N4 dans l'identifiant 2 de la figure 1, est inscrit en caractère gras, s'il fait partie du routage au niveau immédiatement supérieur de la liaison,
- un noeud considéré, par exemple N2 dans l'identifiant 3 de la figure 1, n'est pas inscrit en caractère gras s'il ne fait pas partie du routage de la liaison au niveau immédiatement supérieur, mais s'il est présent au niveau support. On peut ainsi connaître, d'un seul coup d'oeil, les points de brassage d'un routage,
- le traversé d'un anneau est symbolisé par un caractère spécial précisant la boucle d'appartenance de l'anneau traversé, par exemple B dans l'identifiant2 et l'identifiant3 dans la figure 1.

### Exemple de mise en oeuvre

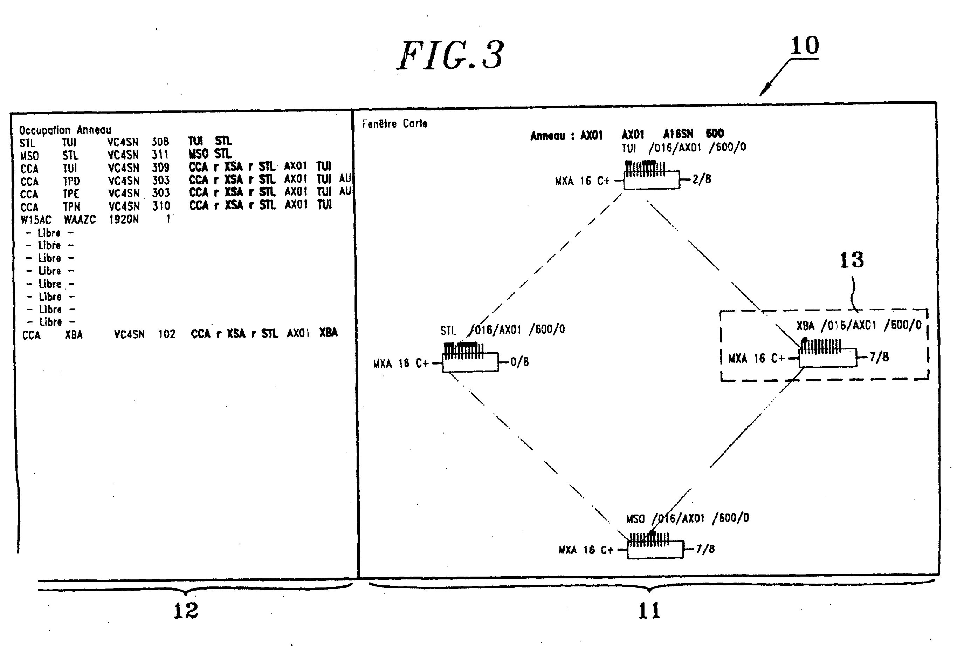

Le procédé de l'invention est utilisé et a été développé dans le cadre de l'application Recife qui permet, comme décrit dans le document référencé [4], de gérer le réseau de transmission numérique PDH et/ou SDH d'Ile de France. Cette application permet de traiter soit le routage/groupage de l'ensemble des demandes d'une année donnée et par extension du triennal (programmation annuelle et triennale), soit le routage des demandes au fil de l'eau (gestion opérationnelle). La figure 3 illustre le résultat graphique d'une telle mise en oeuvre.

### REFERENCES

[1] "Principes de la hiérarchie numérique synchrone" de Gérard Bars (L'écho des recherches, N° 161, troisième trimestre 1995, Centre National d'Etudes des Télécommunications, pages 3 à 14).
[2] "La protection dans les réseaux SDH" de Frédéric Chatter (L'Echo des recherches, N° 161, troisième trimestre 1995, Centre National d'Etudes des Télécommunications, pages 15 à 28).
[3] "La modélisation et la gestion d'un réseau de transport optique" de Françoise Roue Peden (L'Echo des recherches, N° 172, quatrième trimestre 1998, Centre National d'Etudes des Télécommunications, pages 25 à 32).
[4] "Recife : logiciel d'aide au routage et à la gestion des conduits numériques dans le réseau d'Ile de France" de Luiz Burity, Georges Pichon et Martine Benzidi (L'Echo des recherches, N° 161, troisième trimestre 1995, Centre National d'Etudes des Télécommunications, pages 39 à 46).
[5] US-A-6 112 015
[6] Tarle H. : "FMAS-An Operations Support System For Transport Networks" (Ericsson review, Ericsson. Stockholm, SE, vol. 67, no.4, 1990, pages 163-182, XP000206742 ISSN: 0014-0171)

## Revendications

1. Procédé de visualisation d'un anneau, au sein d'une représentation graphique d'un réseau de télécommunication, ledit anneau comportant plusieurs multiplexeurs d'insertion et d'extraction (13) connectés par des sections (17), en formant une boucle, ledit procédé comprenant une étape de représenter chaque multiplexeur d'insertion et d'extraction (13) par une figure géométrique (14), une étape de représenter lesdites sections entre lesdits multiplexeurs d'insertion et d'extraction sous la forme d'un trait, et également une étape de représenter une liste, ledit procédé **caractérisé en ce que** ladite figure comporte au moins une patte (20, 21, 22) d'un premier, second ou troisième type, une patte (20) d'un premier type représentant une alvéole libre, une patte (22) d'un second type représentant une alvéole occupée par une carte d'accès, la carte n'étant pas occupée, une patte (22) d'un troisième type représentant une alvéole occupée par une carte d'accès qui est déjà occupée, **en ce que** ledit trait est d'un premier type si l'anneau est routé, d'un second type si l'anneau n'est pas routé, mais s'il a de la disponibilité, c'est-à-dire s'il a assez de ressources pour le router, ou d'un troisième type si l'anneau n'est pas routé et si, de plus, il n' a pas de disponibilité, c'est-à-dire s'il n'a pas assez de ressources pour le router, et **en ce que** ladite liste est une liste (19) des liaisons occupant l'anneau.

2. Procédé selon la revendication 1, dans lequel une patte (20) d'un premier type est d'une première couleur, une patte (21) d'un second type est d'une seconde couleur et une patte (22) d'un troisième type est de cette même seconde couleur et est surmontée d'un caractère (23) numérique ou alphanumérique.

3. Procédé selon la revendication 2, dans lequel le caractère (23) numérique ou alphanumérique est un point.

4. Procédé selon la revendication 1, dans lequel la figure géométrique (14) est un rectangle.

5. Procédé selon la revendication 1, dans lequel chaque multiplexeur d'insertion et d'extraction (13) est représenté par un identifiant unique (15) qui fournit les informations suivantes :
- le site où le multiplexeur d'insertion et d'extraction est localisé,
- le numéro d'ordre du multiplexeur d'insertion et d'extraction à l'intérieur du site,
- le débit du multiplexeur d'insertion et d'extraction.

6. Procédé selon la revendication 1, dans lequel sont également représentés (16) :
- l'identifiant unique de l'anneau qui comporte le type de l'anneau,
- la politique de protection : conduit ou section.

7. Procédé selon la revendication 1, dans lequel le libellé d'une liaison donnée est définie par un identifiant, et une liste-noeuds-traversés (19), dans lequel sont représentés :
- l'identifiant unique de la liaison,
- la liste des noeuds traversés par la liaison dans laquelle on trouve les extrémités de la liaison, cette liste de noeuds étant représentative du routage de chaque liaison occupant l'anneau.

8. Procédé selon la revendication 7, dans lequel :
- un noeud considéré est inscrit en caractère gras s'il fait partie du routage au niveau immédiatement supérieur de la liaison,
- un noeud considéré n'est pas inscrit en caractère gras s'il ne fait pas partie du routage de la liaison au niveau immédiatement supérieur, mais s'il est présent au niveau support (câble ou infrastructure),
- le traversé d'un anneau est symbolisé par un caractère spécial précisant la boucle d'appartenance de l'anneau traversé.

## Patentansprüche

1. Verfahren zur visuellen Darstellung einer Ringanordnung bei einer graphischen Darstellung eines Telekommunikationsnetzes, wobei die Ringanordnung mehrere durch Sektionen (17) unter Schleifenbildung verbundene Add/Drop-Multiplexer bzw. Abzweig-Multiplexer (13) umfasst, und das Verfahren einen Schritt der Darstellung jedes Abzweig-Multiplexers (13) durch eine geometrische Figur (14), einen Schritt der Darstellung der Sektionen unter den Abzweig-Multiplexern in Form einer Linie und auch einen Schritt der Darstellung einer Liste umfasst, wobei das Verfahren **dadurch gekennzeichnet ist, dass** die Figur mindestens einen Abschnitt (20,21,22) eines ersten, zweiten oder dritten Typs umfasst, wobei ein Abschnitt (20) eines ersten Typs eine freie Zelle darstellt, ein Abschnitt (21) eines zweiten Typs eine von einer Zugriffskarte eingenommene Zelle umfasst, wobei die Karte nicht besetzt ist, einen Abschnitt (22) eines dritten Typs eine Zelle darstellt, die von einer bereits besetzten Zugriffskarte eingenommen ist, dass die Linie von einem ersten Typ ist, wenn die Ringanordnung geroutet wird, von einem zweiten Typ, wenn die Ringanordnung nicht geroutet wird, aber verfügbar ist, das heißt, wenn sie genügend Ressourcen aufweist, um sie zu routen, oder von einem dritten Typ, wenn die Ringanordnung nicht geroutet wird und wenn sie außerdem nich verfügbar ist, das heißt, wenn sie nicht genügend Ressourcen hat, um sie zu routen, und dass die Liste eine Liste (19) der die Ringanordnung besetzenden Verbindungen ist.

2. Verfahren nach Anspruch 1, wobei ein Abschnitt (20) eines ersten Typs eine erste Farbe aufweist, ein Abschnitt (21) eines zweiten Typs eine zweite Farbe aufweist, und ein Abschnitt (22) eines dritten Typs die gleiche Farbe wie die zweite aufweist und mit einem numerischen oder alphanumerischen Zeichen (23) überschrieben ist.

3. Verfahren nach Anspruch 2, wobei das numerische oder alphanumerische Zeichen (23) ein Punkt ist.

4. Verfahren nach Anspruch 1, wobei die geometrische Figur (14) ein Rechteck ist.

5. Verfahren nach Anspruch 1, wobei jeder Add/Drop-Multiplexer bzw. Abzweig-Multiplexer (13) von einem eindeutigen Identifizierer (15) dargestellt wird, der die folgenden Informationen liefert:
- die Stelle, an der sich der Abzweig-Multiplexer befindet,
- die Reihenfolgennummer des Abzweig-Multiplexers an der Stelle,
- den Durchsatz des Abzweig-Multiplexers.

6. Verfahren nach Anspruch 1, bei dem ebenfalls dargestellt werden (16):
- der eindeutige Identifizierer der Ringanordnung, welcher den Typ der Ringanordnung umfasst,
- die Richtlinie zum Schutz: Leitung oder Sektion.

7. Verfahren nach Anspruch 1, bei dem die Bezeichnung einer gegebenen Verbindung durch einen Identifizierer und eine Liste durchquerter Knoten (19) festgelegt wird, in der dargestellt sind:
- der eindeutige Identifizierer der Verbindung,
- die Liste der von der Verbindung durchquerten Knoten, in der die Enden der Verbindung zu finden sind, wobei diese Listen von Knoten repräsentativ für die Wegführung jeder die Ringanordnung einnehmenden Verbindung ist.

8. Verfahren nach Anspruch 7, wobei:
- ein betreffender Knoten in fetten Buchstaben eingeschrieben wird, wenn er einen Teil der Wegführung auf einem unmittelbar über dem Niveau der Verbindung liegenden Niveau bildet,
- ein betreffender Knoten nicht in fetten Buchstaben eingeschrieben wird, wenn er nicht Teil der Wegführung der Verbindung auf dem unmittelbar höheren Niveau ist, sondern auf Trägerniveau (Kabel oder Infrastruktur) vorhanden ist,
- die Durchquerung einer Ringanordnung von einem speziellen Zeichen symbolisiert wird, welches die zugehörige Schleife der durchquerten Ringanordnung angibt.

## Claims

1. Method for displaying a ring within a graphical display of a telecommunications network, the said ring comprising several insertion and extraction multiplexers (13) connected by sections (17) forming a loop, the said method comprising a step for displaying each insertion and extraction multiplexer (13) as a geometrical figure (14), a step for displaying the said sections in between the said insertion and extraction multiplexers in the form of a line, and also a step for displaying a list, the said method **characterized in that** the said figure comprises at least a tab (20, 21, 22) of a first, second and third type, a tab (20) of a first type representing an free cell, a tab (21) of a second type representing a cell occupied by an access card, where the card is not busy, a tab (22) of a third type representing a cell occupied by an access card that is already busy, **in that** the said line is of a first type if the ring is routed, of a second type if the ring is not routed, but if it has availability, in other words if it has sufficient resources to route it, or of a third type if the ring is not routed and if, in addition, it has no availability, in other words if it lacks sufficient resources to route it, and **in that** the said list is a list (19) of the links residing in the ring.

2. Method according to Claim 1, in which a tab (20) of a first type is of a first colour, a tab (21) of a second type is of a second colour and a tab (22) of a third type is of this same second colour and is terminated by a numeric or alphanumeric character (23).

3. Method according to Claim 2, in which the numeric or alphanumeric character (23) is a full stop.

4. Method according to Claim 1, in which the geometrical figure (14) is a rectangle.

5. Method according to Claim 1, in which each insertion and extraction multiplexer (13) is represented by a unique identifier (15) that provides the following information:
- the site where the insertion and extraction multiplexer is located,
- the order number of the insertion and extraction multiplexer within the site,
- the data rate of the insertion and extraction multiplexer.

6. Method according to Claim 1, in which the following (16) are also displayed:
- the unique identifier for the ring that comprises the type of the ring,
- the protection policy: path or line.

7. Method according to Claim 1, in which the labelling of a given link is defined by an identifier and a nodes-crossed list (19), in which the following are displayed:
- the unique identifier of the link,
- the list of nodes crossed by the link in which the ends of the link are found, this list of nodes being representative of the routing for each link residing in the ring.

8. Method according to Claim 7, in which:
- a node considered is displayed in bold characters if it is part of the routing at the immediately higher level of the link,
- a node considered is not displayed in bold characters if it is not part of the routing of the link at the immediately higher level, but if it is present in the bearer (cable or infrastructure),
- the crossing of a ring is symbolized by a special character indicating the loop to which the ring crossed belongs.
